# FASCICULE DE BREVET EUROPEEN

(11) **EP 2 893 671 B1**
(45) Date de publication et mention de la délivrance du brevet: **15.01.2020**
(21) Numéro de dépôt: 13758834.9
(22) Date de dépôt: 03.09.2013
(51) Int. Cl.: H04L 12/24, H04L 12/28, H04L 29/08

(54) **SYSTÈME DE GESTION DE DONNÉES RELATIVES AUX UTILISATEURS D'UN SYSTÈME DE COMMUNICATION**
SYSTEM ZUR VERWALTUNG VON BENUTZERN EINES KOMMUNIKATIONSSYSTEMS
SYSTEM FOR MANAGING DATA RELATING TO THE USERS OF A COMMUNICATION SYSTEM

(30) Priorité: 03.09.2012 FR 1258177
(43) Date de publication de la demande: 15.07.2015
(73) Titulaire: Kurmi Software, 35510 Cesson-Sevigne (FR)
(72) Inventeur: KRAVANJA, Christian, F-75015 Paris (FR); POLLET, Ludovic, F-35650 Le Rheu (FR); GUIRARDEL, Bruno, F-35135 Chantepie (FR)
(74) Mandataire: Regimbeau
(86) Numéro de dépôt international: PCT/EP2013/068129
(87) Numéro de publication internationale: WO 2014/033310

(56) Documents cités:
- EP-A1- 1 241 828
- WO-A1-00/76228

## Description

### DOMAINE DE L'INVENTION

La présente invention concerne les systèmes de gestion de données relatives aux utilisateurs d'un système de communication.

Plus particulièrement, la présente invention concerne un système de gestion des utilisateurs d'un système de communication dans un environnement réseau hétérogène.

### ETAT DE LA TECHNIQUE

Les systèmes de communications modernes permettent d'intégrer les moyens de communications interpersonnels au sein d'une entreprise. Ces systèmes permettent à l'utilisateur d'effectuer de nombreuses opérations à partir de son ordinateur de bureau ou de son ordinateur portable telles que gérer ses contacts et son agenda, communiquer par courriel, connaître l'état de présence d'un collègue, initier une communication vocale ou visioconférence, gérer sa joignabilité derrière un numéro d'appel unique, programmer des réunions, vérifier la disponibilité des invités, suivre les réponses aux invitations, animer et participer à une réunion audio ou vidéo, publier et modifier un document en temps réel, consulter ses messages vocaux, les fax reçus ou encore transférer rapidement et de manière sécurisée un document.

Il existe de nombreux fournisseurs de service de communications (dites « unifiées ») proposant chacun des environnements de communication différents. On observe couramment une cohabitation au sein d'une même entreprise de différents environnements de communication non compatibles. Les systèmes de communication résultants sont souvent hétérogènes, et les rachats, fusions ou réorganisations d'entreprises sont des facteurs qui accentuent cette tendance.

Il est en effet tout à fait courant que chaque site d'une entreprise ait une architecture de communications spécifique.

Cette hétérogénéité des systèmes de communication au sein d'une entreprise complique considérablement l'accès des utilisateurs au réseau de communication de l'entreprise.

Par exemple lorsqu'un utilisateur se déplace sur un site utilisant un système de communication différent de celui utilisé sur son site d'origine, il faut lui créer un nouveau profil utilisateur dans ce système de communication. Une telle opération est laborieuse et nécessite l'intervention d'un expert.

Dans une configuration « hétérogène » qui comprend au moins deux sous-ensembles « homogènes » incompatibles l'un envers l'autre, les données utilisateur ne peuvent pas être gérées de manière globale. Lorsqu'une modification est apportée aux données utilisateur sur un site donné, cette modification doit être reportée manuellement sur tous les autres sites de l'entreprise.

Pour remédier à ce problème, différentes solutions ont déjà été proposées. Le brevet US 6748436, par exemple, propose une méthode mettant en œuvre un serveur de traduction. L'administrateur envoie au serveur de traduction des instructions de modification des données utilisateur. Le serveur de traduction détermine les serveurs de configuration concernés et réalise une conversion vers le modèle de donnée de ces serveurs.

Cette méthode apporte satisfaction, mais il reste nécessaire de tenir compte de toutes les bases de données pour gérer exhaustivement les profils.

Dans le document D1, EP 1 241 828, une couche passerelle / proxy convertit les commandes génériques de l'architecture de passerelle commune (CGA) en protocoles d'éléments de réseau spécifiques, qui sont traduits en objets / attributs CGA. La communication bidirectionnelle entre le système de gestion d'élément et l'élément de réseau est réalisée à l'aide des traductions. Le document D2, WO 00/76228, décrit un Élément de réseau multiprotocole utilisé dans la gestion de réseau, doté d'une base de données de gestion commune avec une interface qui traite les transactions des sous-systèmes dans un protocole de gestion commun.

### EXPOSE DE L'INVENTION

L'invention propose un système de gestion « homogénéisé » des données relatives aux utilisateurs d'un réseau de communication hétérogène, qui permette aux utilisateurs une meilleure flexibilité dans l'ensemble du réseau de communication d'une entreprise.

Elle propose notamment un système de gestion de données relatives aux utilisateurs d'un système de communication, ledit système de communication comprenant une pluralité d'équipements de communication interconnectés et au moins un serveur de configuration, chaque serveur de configuration étant associé à un sous-ensemble compatible de ladite pluralité d'équipements de communication, au moins deux sous-ensembles étant tels que le serveur de configuration de l'un est incompatible avec des équipements associés au serveur de configuration de l'autre, et chaque serveur de configuration comprenant des moyens de stockage sur lesquels est stockée une base de données relatives aux utilisateurs des équipements associés audit serveur de configuration.

Ce système comprend en outre un serveur d'homogénéisation connecté à chaque serveur de configuration, le serveur d'homogénéisation comprenant des moyens de stockage sur lesquels est stockée une base de données comprenant l'ensemble des données relatives aux utilisateurs des équipements associés aux serveurs de configuration dans un format homogénéisé, le serveur d'homogénéisation comprenant des moyens de traitement de données configurés pour mettre à jour sa base de données conformément à toute modification de la base de données d'un serveur de configuration et à mettre à jour la base de données d'au moins un serveur de configuration conformément à toute modification de la base de données du serveur d'homogénéisation.

Un tel système permet de faciliter encore la gestion homogénéisée en utilisant un serveur (dit « d'homogénéisation ») comportant sa propre base de données persistante stockant l'ensemble des données relatives aux utilisateurs des équipements associés aux serveurs de configuration. En d'autres termes, dans le système proposé, toutes les données relatives à des utilisateurs sont présentes en double : une fois dans la base de données de l'un des serveurs de configuration, et une fois dans la base de données de ce nouveau serveur.

Grâce à ce système, il devient facile, y compris pour un utilisateur non-expert, de créer, gérer, transférer et configurer des profils utilisateurs dans un environnement hétérogène.

Un tel système peut être complété par les différentes caractéristiques suivantes prises seules ou en combinaison :
- le serveur d'homogénéisation comporte, pour chacun des serveurs de configuration, un connecteur assurant la conversion de données stockées par le serveur d'homogénéisation dans le format de données de la base de données du serveur de configuration et/ou la conversion de données stockées par le serveur de configuration dans le format de données de la base de données du serveur d'homogénéisation ;
- le serveur d'homogénéisation comporte, en outre, un composant apte à générer, à partir de données relatives à un utilisateur stockées dans les différentes bases de données des différents serveurs de configuration, au moins un profil utilisateur homogénéisé ;
- le système comporte au moins un équipement informatique connecté au serveur d'homogénéisation pour la mise en œuvre d'une interface permettant à un utilisateur d'effectuer des modifications sur les données stockées sur le serveur d'homogénéisation.

L'invention propose en outre un procédé pour la mise à jour de données relatives à un utilisateur d'un système de communication comprenant une pluralité d'équipements de communication interconnectés et au moins un serveur de configuration.

Elle propose également un serveur d'homogénéisation.

### DESCRIPTION DES FIGURES

D'autres caractéristiques, buts et avantages de la présente invention apparaitront mieux à lecture de la description détaillée qui va suivre, donnée à titre d'exemple non-limitatif et faite en référence à la figure unique annexée, qui est une représentation schématique du système de gestion de données relatives aux utilisateurs d'un système de communication conforme à un mode de réalisation possible pour l'invention.

### DESCRIPTION DETAILLEE DE L'INVENTION

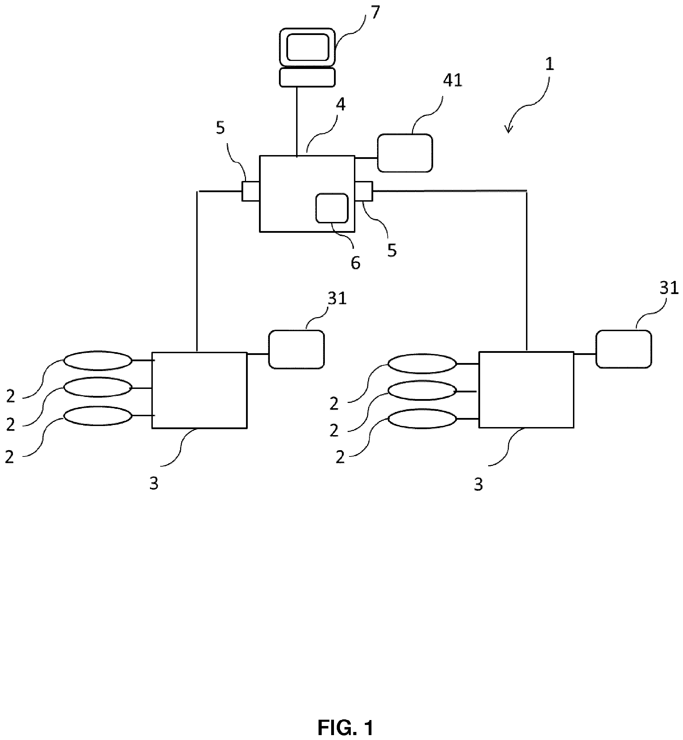

Le système de communication de la figure 1 comprend une pluralité d'équipements 2 de communication interconnectés tels que les équipements de téléphonie fixe et mobile, de visiophonie, des équipement informatiques tels des postes de travail mettant en œuvre des outils de travail collaboratif (comme la messagerie instantanée, la présence, les systèmes de conférences par le web, de partage et de gestion de documents...) et des outils de bureautique, comme le client de messagerie électronique, l'agenda, le traitement de texte ou le logiciel de visionnage de présentations.

Ces équipements 2 de communication sont regroupés en sous-ensembles compatibles, c'est-à-dire configurés selon une même logique. A chacun de ces sous ensemble est associé un serveur de configuration 3.

Ces serveurs de configuration 3 comprennent des moyens de stockage 31 sur lesquels est stockée une base de données relative aux utilisateurs des équipements qui leur sont associés.

Ces différents serveurs de configuration 3 stockent des bases de données organisées selon un modèle de données qui leur est propre. Ces différents modèles de données ne sont ainsi généralement pas compatibles les uns avec les autres.

En effet, chaque marque de serveur de configuration 3 (Cisco, Avaya, etc.) a sa base de données présentant une structure spécifique (conçue par le fabricant du serveur 3) et répondant à des commandes dans une syntaxe particulière. Il est courant que deux serveurs 3 de marques concurrentes présentent un grand nombre de paramètres communs (nom, numéro de poste, identifiant, équipement, adresse mail, etc.), mais certains paramètres ne se retrouvent pas chez chacun.

Dans le présent système, au moins deux sous-ensembles sont ainsi tels que le serveur de configuration 3 de l'un est incompatible avec des équipements 2 associés au serveur de configuration 3 de l'autre, en d'autres termes, on trouve au moins une hétérogénéité. On comprendra toutefois qu'il est tout à fait possible que le système comprenne par ailleurs plusieurs sous-ensembles qui soient quant à eux compatibles, à condition qu'on ait au moins une hétérogénéité. A titre d'exemple, un système peut comprendre trois serveurs de configuration 3 dont deux de marque Cisco et un de marque Avaya : les sous-ensembles d'équipements 2 associés avec les deux serveurs Cisco sont compatibles entre eux, mais le sous-ensemble des équipements 2 associés au serveur Avaya est incompatible avec ces derniers.

Le système 1 de gestion de données relatives aux utilisateurs d'un système de communication comprend un serveur d'homogénéisation 4 connecté à chaque serveur de configuration 3. Ce serveur d'homogénéisation 4 comprend des moyens de stockage 41 sur lesquels est stockée une base de données comprenant l'ensemble des données relatives aux utilisateurs des équipements associés aux serveurs de configuration 3.

Ces données sont stockées dans un format homogénéisé compatible avec les différents modèles de donnée des différents serveurs de configuration. Concrètement, la base de données du serveur d'homogénéisation utilise un langage d'abstraction (typiquement un langage de balisage tel XML ou JSON) supérieur à celui des bases de données des serveurs de configuration. Les paramètres d'utilisateur dans cette base de données homogénéisée sont tous les paramètres utilisés par au moins une base de données d'un serveur de configuration 3 (des valeurs par défaut étant éventuellement utilisées pour les paramètres « en surnombre ») de sorte à être sûr que le serveur d'homogénéisation contienne la totalité de l'information.

Le choix d'une base de données persistante supplémentaire peut sembler dangereux pour un homme du métier, dans la mesure où tout « décalage » entre les bases de données serait une source d'erreurs.

Le système proposé prévoit à cet effet que le serveur d'homogénéisation 4 est configuré pour mettre à jour sa base de données conformément à toute modification de la base de données d'un serveur de configuration 3.

Réciproquement, le serveur d'homogénéisation est configuré pour mettre à jour la base de données d'au moins un serveur de configuration 3 conformément à toute modification de sa propre base de données.

Ainsi chaque modification d'une base de données est immédiatement suivie de la modification correspondante sur l'autre base de données, de sorte à prévenir tout décalage. En outre, des mécanismes supplémentaires de vérification d'intégrité, qui seront décrits plus loin, assurent avantageusement une correspondance parfaite.

Il est à noter qu'en général, une modification au niveau de la base de données homogénéisée entraîne la modification de la base de données d'un seul serveur de configuration 3, mais il est tout à fait possible que plusieurs voire tous les serveurs de configuration soient impactés.

Le serveur d'homogénéisation 4 comporte pour chacun des serveurs de configuration 3, un connecteur 5 apte à mettre en cohérence les données stockées par le serveur d'homogénéisation 4 avec le modèle de donnée de la base de données du serveur de configuration 3. En d'autres termes, ce connecteur 5 (il peut être à double sens, alternativement on peut avoir deux connecteurs) assure la conversions des données d'une base de données dans le format d'une autre. Par exemple, dans le cas d'un changement d'adresse e-mail d'un utilisateur au niveau du serveur d'homogénéisation 4, le connecteur 5 « écrit » une requête de modification de la base de données du serveur de configuration 3 dans la base de données duquel l'adresse dont également être corrigée, cette requête étant dans un format et une syntaxe acceptée par ledit serveur de configuration 3.

Le serveur d'homogénéisation 4 comporte en outre un composant 6 (par composant on entend un module logiciel mis en oeuvre par les moyens de traitement de données du serveur d'homogénéisation 4) apte à générer, à partir de données relatives à un utilisateur stockées dans les différentes bases de données des différents serveurs de configuration 3, au moins un profil utilisateur homogénéisé. Par profil utilisateur homogénéisé, on entend une classe de profil au niveau de la base de données du serveur d'homogénéisation 4.

On peut ainsi définir différents types de profil auxquels sont associés des équipements et services spécifiques. Par exemple, on peut définir un profil spécifique à un département ou à un poste. Cela permet de pré-remplir un certain nombre de paramètre.

A titre d'exemple, un profil « premium » peut automatiquement présenter un numéro de fixe, un numéro de portable, une adresse e-mail, le renvoi automatique du fixe vers le portable et/ou vers un poste d'assistante.

Par ailleurs, le système 1 de gestion de données relatives aux utilisateurs d'un système de communication selon l'invention comporte au moins un équipement informatique 7 connecté au serveur d'homogénéisation 4 mettant en œuvre une interface. Cette interface permet à un utilisateur d'effectuer des modifications sur les données stockées sur le serveur d'homogénéisation 4. Grâce à cette interface utilisateur, la manipulation des données est facilitée. Des scripts y sont avantageusement intégrés de sorte à automatiser des tâches courantes telles que déplacement d'un utilisateur d'un site à un autre sans changer ses paramètres. De tels scripts peuvent éventuellement concerner plusieurs serveurs de configuration 3 incompatibles entre eux, en découpant les tâches.

Un premier exemple est le script « déménagement ». Ce script permet en un clic de gérer le déplacement d'une équipe (voire d'un site complet) d'une localisation à une autre. Ce script commence par la modification au niveau de leurs profils homogénéisés (stockés sur le serveur d'homogénéisation 4) d'un ou plusieurs champs relatifs à la localisation des utilisateurs concernés. Cette modification entraîne, via le mécanisme de persistance, d'une part l'écriture de données relatives aux utilisateurs concernés sur le serveur de configuration 3 du lieu de destination, et d'autre part la suppression des données correspondantes sur le serveur de configuration 3 du lieu de départ.

Un second exemple est un script de « gestion de crise ». Ce script permet en un clic de rebasculer à tour de rôle des appels sur un numéro donné (en particulier un « numéro vert ») vers les postes d'un certain nombre d'utilisateurs désignés pour répondre aux appels du public à ce numéro. Ce script modifie dynamiquement les informations homogénéisées relatives à ces utilisateurs désignés pour que les appels au numéro donné soient redirigés vers leur poste.

Un procédé pour la mise à jour de données relatives à un utilisateur mis en oeuvre par ce système de communication peut être le suivant.

Ce procédé comporte les deux étapes mentionnées précédemment de mise à jour successive des deux niveaux de bases de données:
- modifications des données utilisateur stockées dans une base de données du serveur d'homogénéisation 4, ledit serveur d'homogénéisation étant connecté à chaque serveur de configuration 3 ;
- mise à jour par des moyens de traitement de données du serveur d'homogénéisation 4 de la base de données du ou des serveurs de configuration 3 sur lesquels sont stockés lesdites données relatives audit utilisateur, conformément aux modifications de la base de données du serveur d'homogénéisation 4.

En d'autres termes, un administrateur effectue initialement, des modifications des données utilisateur stockées dans la base de données du serveur d'homogénéisation 4, et en conséquence, le serveur d'homogénéisation 4 met à jour la base de données des serveurs de configuration 3 conformément aux modifications de sa base de données.

Une étape de mise en cohérence des données stockées par le serveur d'homogénéisation 4 avec le modèle de donnée de la base de données du serveur de configuration 3 peut être nécessaire avant la mise à jour de la base de données des serveurs de configuration 3 conformément aux modifications de la base de données du serveur d'homogénéisation 4.

Le procédé peut en outre comprendre une étape de génération, à partir de données relatives à un utilisateur stockées dans les différentes bases de données des différents serveurs de configuration 3, d'un profil utilisateur homogénéisé.

La prise en considération de plusieurs sources hétérogènes lors de la génération d'un profil utilisateur homogénéisé peut induire en cas d'erreur l'apparition d'un conflit dû à une contradiction au niveau des informations fournies.

C'est pourquoi, il est judicieux d'exécuter régulièrement une procédure de vérification de la cohérence des données utilisateur stockées sur le serveur d'homogénéisation 4 et les serveurs de configuration 3.

Ce mécanisme de vérification, mentionné précédemment, consiste en une comparaison des bases de sorte à repérer des éventuelles contradictions. Dans un mode de réalisation particulièrement avancé, il est mis en oeuvre à la suite de toute modification, pour s'assurer que tout s'est bien passé. Alternativement, cette procédure de vérification peut être réalisée périodiquement ou être déclenchée par un administrateur.

Plusieurs modes de mise en œuvre de cette procédure de vérification sont ainsi possibles. Avantageusement, selon un « safe mode », un premier et un second temporisateurs (en anglais « timer ») sont lancés suite à l'étape de vérification de la cohérence des données utilisateur, le second temporisateur étant plus long que le premier temporisateur.

A l'issue du premier temporisateur (d'une longueur par exemple de deux minutes) une relance de cette étape de vérification de la cohérence des données utilisateur est suggérée à l'utilisateur. S'il ne répond pas à cette suggestion, le second temporisateur (d'une longueur par exemple de dix minutes) continue à défiler. A l'issue de ce dernier, la relance de cette étape de vérification de la cohérence des données utilisateur est mise en œuvre d'office. Les temporisateurs défilent ici tant qu'un utilisateur est en train de manipuler les données. Une fois qu'il coupe l'interface de gestion décrite précédemment (aucune modification ne peut alors avoir lieu), les vérifications ne sont plus nécessaires.

En cas de découverte d'une anomalie lors de l'étape de vérification de la cohérence des données utilisateur (i.e. une différence entre les bases de données), est alors mise en œuvre une étape de rectification des données utilisateur. Deux modes principaux sont alors possibles : le mode « maître », dans lequel est imposé l'état du serveur d'homogénéisation 4 (on suppose que l'erreur est au niveau des bases de données des serveurs de configuration 3) et le mode « esclave » dans lequel est imposé l'état des serveurs de configuration 3 (on suppose que l'erreur est au niveau de la base de données du serveur d'homogénéisation 4). Dans un mode « intermédiaire », on propose à l'utilisateur à chaque rectification de choisir entre ces deux modes maître ou esclave.

Comme déjà indiqué, le serveur d'homogénéisation 4 d'un système 1 de gestion de données relatives aux utilisateurs d'un système de communication, est connecté à au moins un serveur de configuration 3 du système de gestion 1, ledit serveur d'homogénéisation 4 comprenant des moyens de stockage 41 sur lesquels est stockée une base de données comprenant dans un format homogénéisé l'ensemble des données relatives à des utilisateurs d'équipements 2 associés aux serveurs de configuration 3, le serveur d'homogénéisation 4 comprenant des moyens de traitement de données configurés pour mettre à jour sa base de données conformément à toute modification d'une base de données d'un serveur de configuration 3 et à mettre à jour la base de données d'au moins un serveur de configuration 3 conformément à toute modification de la base de données du serveur d'homogénéisation 4.

## Revendications

1. Système (1) de gestion de données relatives aux utilisateurs d'un système de communication, ledit système de communication comprenant une pluralité d'équipements (2) de communication interconnectés et au moins un serveur de configuration (3), chaque serveur de configuration (3) étant associé à un sous-ensemble compatible de ladite pluralité d'équipements (2) de communication, au moins deux sous-ensembles étant tels que le serveur de configuration (3) de l'un est incompatible avec des équipements (2) associés au serveur de configuration (3) de l'autre, et chaque serveur de configuration (3) comprenant des moyens de stockage (31) sur lesquels est stockée une base de données relatives aux utilisateurs des équipements associés audit serveur de configuration (3),
le système étant **caractérisé en ce qu'**il comprend en outre un serveur d'homogénéisation (4) connecté à chaque serveur de configuration (3), le serveur d'homogénéisation (4) comprenant des moyens de stockage (41) sur lesquels est stockée une base de données comprenant l'ensemble des données relatives aux utilisateurs des équipements associés aux serveurs de configuration (3) dans un format homogénéisé, le serveur d'homogénéisation (4) comprenant des moyens de traitement de données configurés pour mettre à jour sa base de données conformément à toute modification de la base de données d'un serveur de configuration (3) et à mettre à jour la base de données d'au moins un serveur de configuration (3) conformément à toute modification de la base de données du serveur d'homogénéisation (4).

2. Système selon la revendication précédente, **caractérisé en ce que** le serveur d'homogénéisation (4) comporte, pour chacun des serveurs de configuration (3), un connecteur (5) assurant la conversion de données stockées par le serveur d'homogénéisation (4) dans le format de données de la base de données du serveur de configuration (3) et/ou la conversion de données stockées par le serveur de configuration (3) dans le format de données de la base de données du serveur d'homogénéisation (4).

3. Système selon l'une des revendications précédentes, **caractérisé en ce que** le serveur d'homogénéisation (4) comporte, en outre, un composant (6) apte à générer, à partir de données relatives à un utilisateur stockées dans les différentes bases de données des différents serveurs de configuration (3), au moins un profil utilisateur homogénéisé.

4. Système selon l'une des revendications précédentes, **caractérisé en ce qu'**il comporte au moins un équipement informatique (7) connecté au serveur d'homogénéisation (4) pour la mise en œuvre d'une interface permettant à un utilisateur d'effectuer des modifications sur les données stockées sur le serveur d'homogénéisation (4).

5. Procédé pour la mise à jour de données relatives à un utilisateur d'un système de communication comprenant une pluralité d'équipements (2) de communication interconnectés et au moins un serveur de configuration (3), chaque serveur de configuration (3) étant associé à un sous-ensemble compatible de ladite pluralité d'équipements (2) de communication, au moins deux sous-ensembles étant tels que le serveur de configuration (3) de l'un est incompatible avec des équipements (2) associés au serveur de configuration (3) de l'autre, et chaque serveur de configuration (3) comprenant des moyens de stockage (31) sur lesquels est stockée une base de données relatives aux utilisateurs des équipements associés audit serveur de configuration (3), le procédé étant **caractérisé en ce qu'**il comporte les étapes suivantes :
- modifications des données utilisateur stockées dans une base de données d'un serveur d'homogénéisation (4), ledit serveur d'homogénéisation étant connecté à chaque serveur de configuration (3) ;
- mise à jour par des moyens de traitement de données du serveur d'homogénéisation (4) de la base de données du ou des serveurs de configuration (3) sur lesquels sont stockés lesdites données relatives audit utilisateur, conformément aux modifications de la base de données du serveur d'homogénéisation (4).

6. Procédé selon la revendication précédente, **caractérisé en ce que** l'étape de mise à jour de la base de données du ou des serveurs de configuration (3) sur lesquels sont stockés lesdites données relatives audit utilisateur comprend la mise en cohérence des données stockées par le serveur d'homogénéisation (4) avec le modèle de donnée de la base de données du serveur de configuration (3).

7. Procédé selon l'une des revendications 5 ou 6, **caractérisé en ce qu'**il comporte en outre une étape de vérification de la cohérence des données utilisateur stockées sur le serveur d'homogénéisation (4) et les serveurs de configuration (3).

8. Procédé selon la revendication 7, **caractérisé en ce qu'**un premier temporisateur est lancé suite à l'étape de vérification de la cohérence des données utilisateur, une relance de cette étape de vérification de la cohérence des données utilisateur étant suggérée à l'utilisateur à l'issue du premier temporisateur.

9. Procédé selon la revendication 8, **caractérisé en ce qu'**un second temporisateur est lancé suite à l'étape de vérification de la cohérence des données utilisateur, le second temporisateur étant plus long que le premier temporisateur, une relance de cette étape de vérification de la cohérence des données utilisateur étant mise en œuvre d'office à l'issue du second temporisateur.

10. Procédé selon l'une des revendications 7 à 9, **caractérisé en ce qu'**en cas de découverte d'une anomalie lors de l'étape de vérification de la cohérence des données utilisateur, est mise en œuvre une étape de rectification des données utilisateur lors de laquelle est imposé soit l'état des bases de données des serveurs de configuration (3), soit l'état de la base de données du serveur d'homogénéisation (4).

11. Serveur d'homogénéisation (4) d'un système (1) de gestion de données relatives aux utilisateurs d'un système de communication, le serveur d'homogénéisation (4) étant **caractérisé en ce qu'**il est connecté à au moins un serveur de configuration (3) du système de gestion (1), le serveur d'homogénéisation (4) comprenant des moyens de stockage (41) sur lesquels est stockée une base de données comprenant dans un format homogénéisé l'ensemble des données relatives à des utilisateurs d'équipements (2) associés aux serveurs de configuration (3), le serveur d'homogénéisation (4) comprenant des moyens de traitement de données configurés pour mettre à jour sa base de données conformément à toute modification d'une base de données d'un serveur de configuration (3) et à mettre à jour la base de données d'au moins un serveur de configuration (3) conformément à toute modification de la base de données du serveur d'homogénéisation (4).

## Patentansprüche

1. System (1) zur Verwaltung von Daten in Bezug auf die Benutzer eines Kommunikationssystems, wobei das Kommunikationssystem eine Vielzahl von vernetzten Geräten (2) zur Kommunikation und wenigstens einen Konfigurationsserver (3) umfasst, wobei jeder Konfigurationsserver (3) mit einer Untereinheit assoziiert ist, welche mit der Vielzahl der Geräte (2) zur Kommunikation kompatibel ist, wobei wenigstens zwei Untereinheiten solcherart beschaffen sind, dass der Konfigurationsserver (3) der einen inkompatibel mit den Geräten (2) ist, welche mit dem Konfigurationsserver (3) der anderen assoziiert sind, und wobei jeder Konfigurationsserver (3) Speichermittel (31) enthält, auf welchen eine Basis von Daten in Bezug auf die Benutzer der Geräte gespeichert ist, welche mit dem Konfigurationsserver (3) assoziiert sind,
wobei das System **dadurch gekennzeichnet ist, dass** es weiter einen mit jedem Konfigurationsserver (3) verbundenen Homogenisierungsserver (4) umfasst, wobei der Homogenisierungsserver (4) Speichermittel (41) umfasst, auf welchen eine Datenbasis gespeichert ist, welche die Gesamtheit der Daten in Bezug auf die Benutzer der mit den Konfigurationsservern (3) assoziierten Geräte in einem homogenisierten Format umfasst, wobei der Homogenisierungsserver (4) Mittel zur Aufbereitung der Daten umfasst, welche konfiguriert sind, um seine Datenbasis konform mit jeglicher Modifikation der Datenbasis eines Konfigurationsservers (3) zu aktualisieren und die Datenbasis von wenigstens einem Konfigurationsserver (3) konform mit jeglicher Modifikation der Datenbasis des Homogenisierungsservers (4) zu aktualisieren.

2. System nach dem vorhergehenden Anspruch, **dadurch gekennzeichnet, dass** der Homogenisierungsserver (4) für jeden seiner Konfigurationsserver (3) einen Anschluss (5) umfasst, welcher die Konvertierung der von dem Homogenisierungsserver (4) gespeicherten Daten in das Datenformat der Datenbasis des Konfigurationsservers (3) und/oder die Konvertierung der von dem Konfigurationsserver (3) gespeicherten Daten in das Datenformat der Datenbasis des Homogenisierungsservers (4) gewährleistet.

3. System nah einem der vorhergehenden Ansprüche, **dadurch gekennzeichnet, dass** der Homogenisierungsserver (4) weiter eine Komponente (6) umfasst, dafür geeignet, aus Daten in Bezug auf einen Benutzer, gespeichert in den verschiedenen Datenbasen der verschiedenen Konfigurationsserver (3), wenigstens ein homogenisiertes Benutzerprofil zu generieren.

4. System nach einem der vorhergehenden Ansprüche, **dadurch gekennzeichnet, dass** es wenigstens ein Informatik-Gerät (7) umfasst, verbunden mit dem Homogenisierungsserver (4) zum Realisieren einer Schnittstelle, die es einem Benutzer ermöglicht, Modifikationen an den auf dem Homogenisierungsserver (4) gespeicherten Daten vorzunehmen.

5. Verfahren zum Aktualisieren von Daten in Bezug auf einen Benutzer eines Kommunikationssystems, eine Vielzahl von vernetzten Geräten (2) zur Kommunikation und wenigstens einen Konfigurationsserver (3) umfassend, wobei jeder Konfigurationsserver (3) mit einer Untereinheit assoziiert ist, welche mit der Vielzahl von Geräten (2) zur Kommunikation kompatibel ist, wobei wenigstens zwei Untereinheiten solcherart beschaffen sind, dass der Konfigurationsserver (3) der einen inkompatibel mit den Geräten (2) ist, welche mit dem Konfigurationsserver (3) der anderen assoziiert sind, und jeder Konfigurationsserver (3) Speichermittel (31) umfasst, auf denen eine Basis von Daten in Bezug auf die Benutzer der mit dem Konfigurationsserver (3) assoziierten Geräte sind, wobei das Verfahren **dadurch gekennzeichnet ist, dass** es die folgenden Schritte umfasst:
- Modifikationen der in einer Datenbasis eines Homogenisierungsservers (4) gespeicherten Benutzerdaten, wobei der Homogenisierungsserver mit jedem Konfigurationsserver (3) verbunden ist;
- Aktualisieren durch Mittel zur Aufbereitung der Daten des Homogenisierungsservers (4) der Datenbasis des oder der Konfigurationsserver (3), auf welchen die Daten in Bezug auf den Benutzer gespeichert sind, konform mit den Modifikationen der Datenbasis des Homogenisierungsservers (4).

6. Verfahren nach dem vorhergehenden Anspruch, **dadurch gekennzeichnet, dass** der Schritt des Aktualisierens der Datenbasis des oder der Konfigurationsserver (3), auf welchen die Daten in Bezug auf den Benutzer gespeichert sind, die Kohärenzherstellung der von dem Homogenisierungsserver (4) gespeicherten Daten mit dem Datenmodell der Datenbasis des Konfigurationsservers (3) umfasst.

7. Verfahren nach einem der Ansprüche 5 oder 6, **dadurch gekennzeichnet, dass** es weiter einen Schritt zur Verifizierung der Kohärenz der auf dem Homogenisierungsserver (4) und den Konfigurationsservern (3) gespeicherten Benutzerdaten umfasst.

8. Verfahren nach Anspruch 7, **dadurch gekennzeichnet, dass** ein erster Zeitschalter nach dem Schritt der Verifizierung der Kohärenz der Benutzerdaten gestartet wird, wobei dem Benutzer infolge des ersten Zeitschalters ein Neustart dieses Schrittes der Verifizierung der Kohärenz der Benutzerdaten vorgeschlagen wird.

9. Verfahren nach Anspruch 8, **dadurch gekennzeichnet, dass** nach dem Schritt der Verifizierung der Kohärenz der Benutzerdaten ein zweiter Zeitschalter gestartet wird, wobei der zweite Zeitschalter länger ist als der erste Zeitschalter, wobei ein Neustart dieses Schrittes der Verifizierung der Kohärenz der Benutzerdaten infolge des zweiten Zeitschalters automatisch realisiert wird.

10. Verfahren nach einem der Ansprüche 7 bis 9, **dadurch gekennzeichnet, dass** im Fall der Entdeckung einer Anomalie bei dem Schritt der Verifizierung der Kohärenz der Benutzerdaten ein Schritt der Korrektur der Benutzerdaten realisiert wird, bei dem entweder der Zustand der Datenbasen der Konfigurationsserver (3) oder der Zustand der Datenbasis des Homogenisierungsservers (4) durchgesetzt wird.

11. Homogenisierungsserver (4) eines Systems (1) zur Verwaltung von Daten in Bezug auf Benutzer eines Kommunikationssystems, wobei der Homogenisierungsserver (4) **dadurch gekennzeichnet ist, dass** er wenigstens mit einem Konfigurationsserver (3) des Verwaltungssystems (1) verbunden ist, wobei der Homogenisierungsserver (4) Speichermittel (41) umfasst, auf denen eine Datenbasis gespeichert ist, umfassend in einem homogenisierten Format die Gesamtheit der Daten in Bezug auf Benutzer von mit den Konfigurationsservern (3) assoziierten Geräten (2), wobei der Homogenisierungsserver (4) Mittel zum Aufbereiten von Daten umfasst, konfiguriert, um seine Datenbasis konform mit jeglicher Modifikation einer Datenbasis eines Konfigurationsservers (3) zu aktualisieren und um die Datenbasis wenigstens eines Konfigurationsservers (3) konform mit jeglicher Modifikation der Datenbasis des Homogenisierungsservers (4) zu aktualisieren.

## Claims

1. System (1) for managing data relating to the users of a communication system, said communication system including a plurality of interconnected communication devices (2) and at least one configuration server (3), each configuration server (3) being associated with a compatible subset of said plurality of communication devices (2), at least two subsets being such that the configuration server (3) of one is incompatible with devices (2) associated with the configuration server (3) of the other, and each configuration server (3) including a storage means (31) which stores a database relating to the users of the devices associated with said configuration server (3),
the system being **characterised in that** it further includes a homogenisation server (4) connected to each configuration server (3), the homogenisation server (4) including a storage means (41) which stores a database including all the data relating to the users of the devices associated with the configuration servers (3) in a homogenised format, the homogenisation server (4) including data processing means configured such as to update the database thereof in accordance with every modification of the database of a configuration server (3) and to update the database of at least one configuration server (3) in accordance with every modification of the database of the homogenisation server (4).

2. System according to the preceding claim, **characterised in that** the homogenisation server (4) comprises, for each of the configuration servers (3), a connector (5) assuring the conversion of data stored by the homogenisation server (4) in the data format of the database of the configuration server (3) and/or the conversion of data stored by the configuration server (3) in the data format of the database of the homogenisation server (4).

3. System according to one of the preceding claims, **characterised in that** the homogenisation server (4) comprises, moreover, a component (6) able to generate, from data relating to a user stored in the different databases of the different configuration servers (3), at least one homogenised user profile.

4. System according to one of the preceding claims, **characterised in that** it comprises at least one computer device (7) connected to the homogenisation server (4) for the implementation of an interface allowing a user to carry out modifications to the data stored on the homogenisation server (4).

5. Method for updating data relating to a user of a communication system including a plurality of interconnected communication devices (2) and at least one configuration server (3), each configuration server (3) being associated with a compatible subset of said plurality of communication devices (2), at least two subsets being such that the configuration server (3) of one is incompatible with the devices (2) associated with the configuration server (3) of the other, and each configuration server (3) including a storage means (31) which stores a database relating to the users of the devices associated with said configuration server (3), the method being **characterised in that** it comprises the following steps:
- modifications of the user data stored in a database of a homogenisation server (4), said homogenisation server being connected to each configuration server (3);
- updating by data processing means of the homogenisation server (4) of the database of the configuration server(s) (3) on which are stored said data relating to said user, in accordance with the modifications of the data of the homogenisation server (4).

6. Method according to the preceding claim, **characterised in that** the step of updating the database of the configuration server(s) (3) on which are stored said data relating to said user includes making the data stored by the homogenisation server consistent with the data model of the database of the configuration server (3).

7. Method according to one of claims 5 or 6, **characterised in that** it further comprises a step of verification of the consistency of the user data stored on the homogenisation server (4) and the configuration servers (3).

8. Method according to claim 7, **characterised in that** a first timer is launched following the step of verification of the consistency of the user data, a re-launch of this step of verification of the consistency of the user data being suggested to the user at the end of the first timer.

9. Method according to claim 8, **characterised in that** a second timer is launched following the step of verification of the consistency of the user data, the second timer being longer than the first timer, a re-launch of this step of verification of the consistency of the user data being implemented as a matter of course at the end of the second timer.

10. Method according to one of claims 7 to 9, **characterised in that** in the event of discovery of an anomaly during the step of verification of the consistency of the user data, a step of rectification of the user data is implemented during which either the status of the databases of the configuration servers (3), or the status of the database of the homogenisation server (4) is imposed.

11. Homogenisation server (4) of a system (1) for managing data relating to the users of a communication system, the homogenisation server (4) being **characterised in that** it is connected to at least one configuration server (3) of the management system (1), the homogenisation server (4) including a storage means (41) which stores a database including in a homogenised format all of the data relating to the users of the devices (2) associated with the configuration servers (3), the homogenisation server (4) including data processing means configured such as to update the database thereof in accordance with every modification of a database of a configuration server (3) and to update the database of at least one configuration server (3) in accordance with every modification of the database of the homogenisation server (4).
